# EUROPÄISCHE PATENTANMELDUNG

(11) **EP 1 563 964 A1**
(43) Veröffentlichungstag der Anmeldung: **17.08.2005**
(21) Anmeldenummer: 05000218.7
(22) Anmeldetag: 07.01.2005
(51) Int. Cl.: B25H 1/00, B23Q 9/00

(54) **Hilfsvorrichtung zum Bearbeiten von Werkstücken**

(30) Priorität: 13.01.2004 DE 202004000359 U
(71) Anmelder: Klapperich, Leo, 56653 Wehr (DE)
(72) Erfinder: Klapperich, Leo, 56653 Wehr (DE)
(74) Vertreter: Kossobutzki, Walter, Dipl.-Ing.(FH)

(57) **Zusammenfassung**

Die Erfindung bezieht sich auf eine Hilfsvorrichtung zum Bearbeiten einer ebenen Fläche eines insbesondere plattenartigen Werkstückes, bestehend aus einer linealartigen Grundschiene (1) mit mindestens einer durch eine Profilierung der Grundschiene (1) gebildeten Führung zum verschiebbaren Anschluss einer Aufnahmeplatte (5,6) mit einer Aufnahme für das auswechselbare Einsetzen einer elektrischen Bearbeitungsvorrichtung.

Um eine sehr genaue Aufnahme von unterschiedlichen, insbesondere von verschiedenen Herstellern stammenden Bearbeitungsvorrichtungen sicher zu stellen und darüber hinaus aber auch die Möglichkeit zu schaffen, die Bearbeitungsvorrichtung genau auf einer vorgegebenen Kreislinie zu führen, weist die Aussparung (11) der Aufnahmeplatte (5,6) mindestens einen verstellbaren und feststellbaren Anschlag (13,14,17,18)für die Bearbeitungsvorrichtung aufweist.

## Beschreibung

Die Erfindung bezieht sich auf eine Hilfsvorrichtung zum Bearbeiten einer ebenen Fläche eines insbesondere plattenartigen Werkstückes, bestehend aus einer linealartigen Grundschiene mit mindestens einer durch eine Profilierung der Grundschiene gebildeten Führung zum verschiebbaren Anschluss einer Aufnahmeplatte mit einer Aussparung für das auswechselbare Einsetzen einer elektrischen Bearbeitungsvorrichtung.

Es ist bekannt, die ebene Oberfläche eines Werkstückes mit einer Oberfräse zu bearbeiten. Es ist ferner bekannt, ein plattenförmiges Werkstück, welches ebenfalls eine ebene Oberfläche besitzt, mit einer Stichsäge zuzuschneiden bzw. Teile aus dem Werkstück herauszuschneiden. In Abhängigkeit von der geometrischen Form der Bearbeitung ist es erforderlich, die Bearbeitungsvorrichtung, also die Oberfräse oder die Stichsäge, möglichst genau zu führen. Dazu kann eine Hilfsvorrichtung verwendet werden, die aus einer linearartigen Grundschiene aus Metall und einer Aufnahmeplatte mit einer Aussparung besteht. Eine solche Grundschiene ist beispielsweise aus der veröffentlichten europäischen Patentanmeldung 1 125 692 bekannt. Die Grundschiene weist eine Führung auf, die vorzugsweise durch eine entsprechende Profilierung der Grundschiene gebildet ist. In diese Führung wird die Aufnahmeplatte mit der Aussparung eingehängt, wobei die Aussparung genau auf die Form und die Größe der verwendeten Bearbeitungsvorrichtung abgestimmt ist, so dass die Bearbeitungsvorrichtung formschlüssig von der Aussparung aufgenommen werden kann. Dies bedeutet, dass eine andere Bearbeitungsvorrichtung, also eine Oberfräse oder eine Stichsäge, die beispielsweise von einem anderen Hersteller stammt und im Aufnahmebereich eine andere Form besitzt, von der Aussparung der Aufnahmeplatte nicht aufgenommen werden kann. Es muss dann dazu eine andere Aufnahmeplatte verwendet werden, die eine genau zu dieser Bearbeitungsvorrichtung passende Aussparung besitzt. Ist eine solche Aufnahmeplatte nicht vorhanden, ist eine genaue Führung der Bearbeitungsvorrichtung und damit ein exaktes Bearbeiten des Werkstückes nicht möglich. Darüber hinaus können mit der bekannten Grundschiene nur linear verlaufende Bearbeitungen durchgeführt werden. Schnitte oder Ausfräsungen, die einen kreisbogenförmigen Verlauf besitzen, sind nur durch eine Führung von Hand erreichbar und daher äußerst ungenau.

Der vorliegenden Erfindung liegt deshalb die Aufgabe zugrunde, eine Hilfsvorrichtung zum Bearbeiten einer ebenen Fläche eines insbesondere plattenartigen Werkstückes zu schaffen, die eine sehr genaue Aufnahme von unterschiedlichen, insbesondere von verschiedenen Herstellern stammenden Bearbeitungsvorrichtungen sicherstellt. Zusätzlich soll auch die Möglichkeit geschaffen werden, die Bearbeitungsvorrichtung genau auf einer vorgegebenen Kreislinie zu führen.

Zur Lösung dieser Aufgabe wird gemäss der Erfindung bei einer Hilfsvorrichtung der eingangs beschriebenen Gattung vorgeschlagen, dass die Aussparung der Aufnahmeplatte mindestens einen verstellbaren und feststellbaren Anschlag für die Bearbeitungsvorrichtung aufweist.

Ein solcher Anschlag kann ohne große Schwierigkeiten und in kürzester Zeit eingestellt und damit der jeweiligen Bearbeitungsvorrichtung angepasst werden. Dadurch ist es möglich, unterschiedliche, insbesondere von unterschiedlichen Herstellern stammende Bearbeitungsvorrichtungen an der Grundschiene einzusetzen und diese sehr genau auf dem Werkstück für die angestrebte Bearbeitung zu führen.

Weitere Merkmale einer Hilfsvorrichtung gemäß der Erfindung sind in den Ansprüchen 1 bis 12 offenbart.

Die Erfindung wird nachfolgend anhand eines in einer Zeichnung dargestellten Ausführungsbeispieles näher erläutert.

In dieser Zeichnung ist eine Draufsicht auf eine Hilfsvorrichtung 1 gezeigt, die zum Bearbeiten einer ebenen Fläche eines nicht dargestellten Werkstückes dient. Im speziellen Fall wird die Hilfsvorrichtung zur Herstellung einer Ausfräsung auf oder eines Schnittes in einem plattenförmigen Werkstückes verwendet. Für die Ausfräsung wird eine handelsübliche Oberfräse und für den Schnitt wird eine handelsübliche Stichsäge verwendet. Für eine einwandfreie Bearbeitung müssen diese Bearbeitungsvorrichtungen genau auf der Oberfläche des Werkstückes geführt werden. Dazu wird die Hilfsvorrichtung eingesetzt.

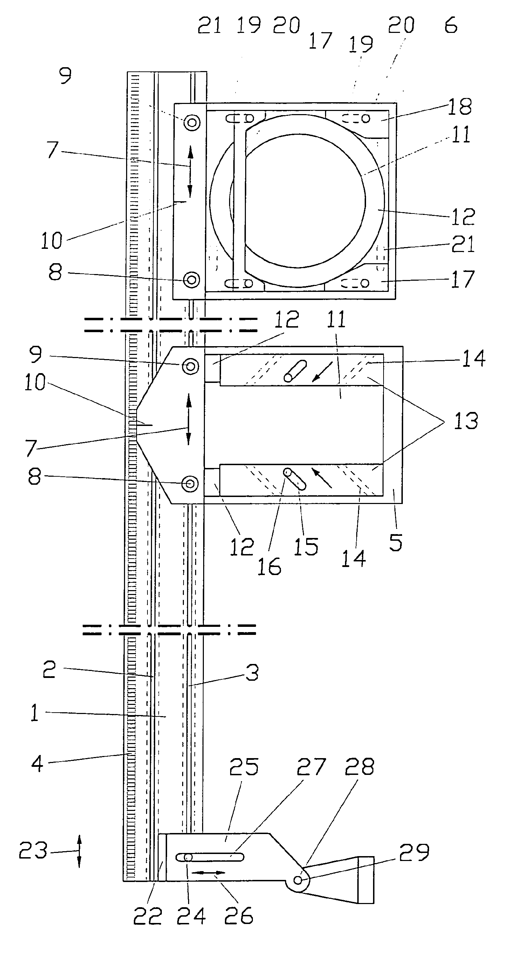

Die Hilfsvorrichtung besteht zunächst aus einer Grundschiene 1, vorzugsweise aus Aluminium, die in unterschiedlichen Längen auf dem Markt erhältlich ist. Die Grundschiene 1, die vorzugsweise im Strangpressverfahren kontinuierlich hergestellt und dann auf die gewünschte Länge zugeschnitten wird, weist in diesem Ausführungsbeispiel an ihrer Oberseite zwei hinterschnittene Nuten 2,3 auf, die einen T- oder schwalbenschwanzförmigen Querschnitt besitzen. Zusätzlich ist am Rand der Oberseite eine Maßskala 4 vorgesehen, die am unteren Ende der Zeichnung in vorteilhafter Weise mit "Null" beginnt. An der Unterseite kann die Grundschiene 1 ebenfalls mindestens eine Nut aufweisen, die jedoch zur deutlicheren Darstellung nicht eingezeichnet und auch für die Erläuterung der Erfindung nicht erforderlich ist. Bedarfsweise kann auf der Oberseite der Grundschiene 1 noch eine in Längsrichtung derselben verlaufende Rippe mit dreieckförmigem Querschnitt vorgesehen sein.

Zur vorerwähnten Führung der Bearbeitungsvorrichtungen sind an der Grundschiene 1 zwei unterschiedlich ausgebildete Aufnahmeplatten 5,6 angeordnet, von denen allerdings für einen Bearbeitungsvorgang immer nur eine Aufnahmeplatte 5 oder 6 zum Einsatz kommt. Diese Aufnahmeplatten 5,6 bestehen in vorteilhafter Weise aus Kunststoff. Jede dieser Aufnahmeplatten 5,6 ist in ihrem unteren, der Grundschiene 1 zugewandten Bereich so profiliert, dass dieselbe formschlüssig an der Grundschiene 1 anliegt. Bedarfsweise kann die Unterseite der Aufnahmeplatten 5,6 auch mindestens eine Feder bzw. einen Vorsprung aufweisen, der eine sehr genaue Führung der Aufnahmeplatten 5,6 in Längsrichtung der Grundschiene 1 gemäß dem Doppelpfeil 7 gewährleistet. Zusätzlich besitzt jede Aufnahme-platte 5,6 zwei durchgehende Bohrungen 8,9, durch die von unten jeweils eine nicht eingezeichnete Schraube ragt, deren Kopf dem Querschnitt der Nut 3 angepasst und in derselben geführt ist. Diese Schrauben ragen dann an der Oberseite der Aufnahmeplatten 5,6 aus denselben heraus und nehmen dort jeweils eine Feststellmutter auf, mit der die jeweilige Aufnahmeplatte 5,6 in ihrer gewünschten Lage auf der Grundschiene 1 unverschiebbar gesichert werden können. Zur Einstellung der genauen Lage der Aufnahmeplatten 5,6 auf der Grundschiene 1 besitzt jede Aufnahmeplatte 5,6 eine Markierung 9, die der Maßskala 4 zugewandt ist.

Jede Aufnahmeplatte 5,6 ist mit einer Aussparung 11 versehen, die bei der Aufnahmeplatte 5 eine rechteckige und bei der Aufnahme-platte 6 eine kreisförmige Form besitzt. Die Aussparung 11 der Aufnahmeplatte 5 weist an zwei sich gegenüberliegenden Seiten jeweils einen abgestuften Rand 12 auf, während dieser Rand 12 bei der Aufnahmeplatte 6 ringförmig umläuft. Auf den beiden Rändern 12 und damit auf der Aufnahmeplatte 5 befindet sich jeweils eine Anschlagleiste 13, die beide aus der gezeichneten Stellung von Hand gegeneinander verschiebbar sind. Dazu sind an der Unterseite jeder Anschlagleiste 13 nur angedeutete Nuten, Schlitze oder Federn 14 vorgesehen, die im dargestellten Ausführungsbeispiel unter einem Winkel von 45° verlaufen und die mit Federn, Nuten oder Schlitzen zusammenwirken, die sich auf der Oberseite der Ränder 12 und damit in der Aufnahmeplatte 5 befinden. Ferner ist in jede Anschlagleiste 13 ein hier ebenfalls unter einem Winkel von 45° verlaufendes Langloch 15 eingearbeitet, durch welches eine in den jeweiligen Rändern 12 bzw. in der Aufnahmeplatte 5 eingesetzte Schraube 16 ragt. Mittels einer auf diese Schraube 16 aufgedrehten Mutter können die Anschlagleisten 13 in ihrer angestrebten Stellung auf den Rändern 12 ein- und festgestellt werden. Diese eingestellte Lage entspricht genau der Breite des Fußes einer Bearbeitungsvorrichtung, beispielweise einer Stichsäge. Durch die beiden Anschlagleisten 13 ist es also möglich, Stichsägen mit unterschiedlicher Grösse, insbesondere Breite ihres Fußes sicher und vor allem spielfrei an der Aufnahmeplatte aufzunehmen und an der Grundschiene 1 zu führen.

Diese Sicherung für eine Bearbeitungsvorrichtung ist bei der Aufnahmeplatte 6 etwas anders ausgebildet. Hier sind auf der Aufnahmeplatte 6 nahe dem Rand 12 eine Anschlagleiste 17 und zwei Anschlagstücke 18 vorgesehen. Sowohl die Anschlagleiste 17 als auch die Anschlagstücke 18 weisen jeweils ein Langloch 19 auf, die allesamt senkrecht zur Grundschiene 1 verlaufen. Es ist auch möglich, diese Langlöcher 19 in der Aufnahmeplatte 6 vorzusehen. Durch diese Langlöcher 19 können die Anschlagleiste 17 und die beiden Anschlagstücke 18 gegeneinander bewegt und damit der Fuß der Bearbeitungsvorrichtung, beispielsweise einer Oberfräse, spielfrei in die Aufnahmeplatte 6 eingesetzt und sicher in seiner Lage gehalten werden. Die Anschlagleiste 17 und die beiden Anschlagstücke 18 ermöglichen also auch hier die Aufnahme von Bearbeitungsvorrichtungen mit unterschiedlicher Größe ihrer Füße. In ihrer jeweiligen Anschlagstellung werden die Anschlagleiste und die beiden Anschlagstücke 18 mittels Schrauben 20 gehalten, die in die Aufnahmeplatte 6 eingesetzt sind und an ihren durch die Anschlagleiste 18 und die Anschlagstücke 19 ragenden Enden eine Feststellmutter aufnehmen.

Bei den beiden Aufnahmeplatten 5,6 ist es möglich, die erwähnten Schrauben 20 auch in Gewindebohrungen der Ränder 12 der Aufnahmeplatte 5 oder der Aufnahmeplatte 6 selbst einzudrehen, während der Kopf der Schrauben 20 außen auf den Anschlagleisten 13,18 und den Anschlagstücken 19 anliegt. An der Aufnahmeplatte 6 können noch vier weitere, jedoch nur angedeutete Langlöcher 21 vorgesehen sein. Diese Langlöcher 21 werden dann benutzt, wenn die Bearbeitungsvorrichtung, beispielsweise die Oberfräse, eine um 90° gedrehte Lage auf der Aufnahmeplatte 6 einnehmen soll. Auch in dieser Lage ist die Bearbeitungsvorrichtung ausreichend gesichert.

Die bisher beschriebene Hilfsvorrichtung ermöglicht nur eine Bearbeitung eines Werkstückes, beispielsweise einer Platte, indem die Bearbeitungsvorrichtung an der Grundschiene 1 entlang bewegt wird. Für diese Bearbeitung sind natürlich die Aufnahmeplatten 5,6 nicht an der Grundschiene 1 festgespannt. Es kommt jedoch auch vor, dass Bearbeitungen an der ebenen Fläche des Werkstückes vorgenommen werden, die auf einer Kreislinie verlaufen. Auch in diesem Fall kann die erfindungsgemäße Hilfsvorrichtung eingesetzt werden. An dem in der Zeichnung unteren Ende der Grundschiene 1 befindet sich im dargestellten Ausführungsbeispiel dazu eine Zwischenplatte 22, welche - wie die beiden vorbeschriebenen Aufnahmeplatten 5,6 - in Richtung des Doppelpfeiles 23 an der Grundschiene 1 verschiebbar geführt und mittels Schrauben 8 an derselben feststellbar ist.

Normalerweise nimmt dabei die Zwischenplatte 22 die eingezeichnete Nullstellung an der Messskala 4 ein. Diese Zwischenplatte 22 weist in diesem Ausführungsbeispiel eine Bohrung 24 auf, durch die eine nicht eingezeichnete Schraube ragt. Diese Schraube ist mit ihrem Kopf drehfest in der Nut 3 der Grundschiene 1 geführt und nimmt an ihrem aus der Zwischenplatte 22 eine nicht gezeichnete Feststellmutter auf. Mit der Feststellmutter kann ein Lagerkörper 25 an der Zwischenplatte 22 festgeklemmt werden, der auf der Zwischenplatte 22 in Richtung des Doppelpfeiles 26 und damit senkrecht zur Grundschiene 1 verschiebbar geführt und damit verschiebbar gehalten ist. Die Länge dieser Verschiebung ist durch ein Langloch 27 begrenzt, welches sich in dem Lagerkörper 25 befindet und durch welches die nicht eingezeichnete Schraube ragt.

Der Lagerkörper 25 weist eine Bohrung 28 auf, die zusammen mit einem eingesteckbaren Nagel oder dergleichen eine Schwenkachse 29 für die Grundschiene 1 bildet. Dieser Nagel kann in das zu bearbeitende Werkstück eingeschlagen werden, so dass die Schwenkachse 29 ortsfest ist und eine Bewegung der Bearbeitungsvorrichtung auf einer genau vorgegebenen Kreislinie ermöglicht. Die Verstellung des Lagerkörpers 25 auf der Zwischenplatte 22 gibt die Möglichkeit, die Schwenkachse 29 genau in dem Abstand von der Grundschiene 1 einzustellen, den auch die Mitte des Bearbeitungswerkzeuges der Bearbeitungsvorrichtung von der Grundschiene 1 aufweist. Dadurch ist immer sichergestellt, dass die Bewegung des Bearbeitungswerkzeuges der Bearbeitungsvorrichtung auch auf der Kreislinie erfolgt, die die Schwenkachse 29 als Mittelpunkt hat. Dies stellt bei einem sägeblattartgen Bearbeitungswerkzeug sicher, dass kein Festklemmen des Bearbeitungswerkzeuges erfolgt. Der Abstand der Markierung 10, den das Bearbeitungswerkzeug von dem unteren Ende der gezeichneten Grundschiene 1 einnimmt, ist dann immer gleich dem Radius der Kreislinie, auf dem sich auch das Bearbeitungswerkzeug bewegt. Der Radius der vorerwähnten Kreislinie ist an der Maßskala 4 ablesbar. Dies erleichtert den Einstellvorgang für das auf der Kreislinie zu bewegende Bearbeitungswerkzeug erheblich.

Wenn die Gefahr besteht, dass durch den die Schwenkachse 29 bildenden Nagel das plattenartige Werkstück an einer noch zu brauchenden Stelle beschädigt wird, ist es möglich, auf den Nagel zu verzichten. Dann wird, wie in der Zeichnung dargestellt, an die Unterseite des Lagers 25 ein Halter 30 angeschlossen, der einen Zapfen besitzt, der genau Aussparung an der Unterseite des Lagerkörpers 25 im Bereich der Bohrung 28 passt. Dieser Halter 30 kann mittels einer Schraubzwinge oder dergleichen auf dem Werkstück festgeklemmt werden. Eine Beschädigung des Werkstückes tritt in diesem Fall nicht mehr ein.

In Abänderung des erläuterten Ausführungsbeispieles ist es möglich, die Anschlagleisten 13,17 und die Anschlagstücke 18 allerdings immer, dass die Bearbeitungswerkzeuge sicher in der anders auszubilden und anzuordnen. Entscheidend dabei ist immer, dass die Bearbeitungswerkzeuge sicher in der angestrebten Lage gehalten werden. Die Führung für die Aufnahmeplatten 5,6 kann auch anders ausgestaltet sein. Die Zwischenplatte 22 und der Lagerkörper 25 können auch einstückig ausgebildet sein. Eine Einstellung der Schwenkachse 29 quer zur Längsrichtung der Grundschiene 1 ist dann allerdings nicht mehr möglich. Die vorerwähnte Verstellung des Lagerkörpers 25 für die Einstellung der Schwenkachse 29 auf den Mittelpunkt der Kreislinie kann entfallen, wenn beispielsweise der Aufnahmeplatte 5 ein Stellantrieb zugeordnet ist, über den die Bearbeitungsvorrichtung so zur Grundschiene 1 eingestellt werden kann, dass sich das Bearbeitungswerkzeug der Bearbeitungsvorrichtung auf der durch den Mittelpunkt des Kreises führenden Tangente befindet.

## Patentansprüche

1. Hilfsvorrichtung zum Bearbeiten einer ebenen Fläche eines insbesondere plattenartigen Werkstückes, bestehend aus einer linealartigen Grundschiene (1) mit mindestens einer durch eine Profilierung der Grundschiene (1) gebildeten Führung zum verschiebbaren Anschluss einer Aufnahmeplatte (5,6) mit einer Aufnahme für das auswechselbare Einsetzen einer elektrischen Bearbeitungsvorrichtung,
**dadurch gekennzeichnet,**
**dass** die Aussparung (11) der Aufnahmeplatte (5,6) mindestens einen verstellbaren und feststellbaren Anschlag (13,14,17,18)für die Bearbeitungsvorrichtung aufweist.

2. Vorrichtung nach Anspruch 1,
**dadurch gekennzeichnet,**
**dass** der Anschlag aus mindestens einer Anschlagleiste (13,14,17) gebildet ist.

3. Vorrichtung nach Anspruch 2,
**dadurch gekennzeichnet,**
**dass** der Anschlag aus zwei gegeneinander und zurück bewegbaren Anschlagleisten (13,14) gebildet ist.

4. Vorrichtung nach Ansruch 2,
**dadurch gekennzeichnet,**
**dass** der Anschlag aus einer Anschlagleiste (17) und zwei Anschlagstücken (18) gebildet ist.

5. Vorrichtung nach mindestens einem der Ansprüche 1 bis 4,
**dadurch gekennzeichnet,**
**dass** die Anschlagleiste(n) (13,14,17) und die Anschlagstücke (18)in Langlöchern (15,19)verschiebbar gehalten sind.

6. Vorrichtung nach Anspruch 5,
**dadurch gekennzeichnet,**
**dass** die Langlöcher (15,19) parallel, senkrecht oder unter einem Winkel zur Grundschiene (1) verlaufen.

7. Vorrichtung nach mindestens einem der Ansprüche 1 bis 6,
**dadurch gekennzeichnet,**
**dass** der Grundschiene (1)eine feststellbare Schwenkachse (29) zugeordnet ist.

8. Vorrichtung nach Anspruch 7,
**dadurch gekennzeichnet,**
**dass** die Schwenkachse (29) an einem an der Grundschiene (1) verschiebbaren Arm (22,25) ausgebildet ist.

9. Vorrichtung nach Anspruch 7 oder 8,
**dadurch gekennzeichnet,**
**dass** die Schwenkachse (29) aus einer Bohrung mit einem am Werkstück festsetzbaren Stift gebildet ist.

10. Vorrichtung nach Anspruch 7 oder 8,
**dadurch gekennzeichnet,**
**dass** die Schwenkachse (29) durch einen mit dem Arm (22,25) drehbar verbundenen und am Werkstück festlegbaren Halter (30) gebildet ist.

11. Vorrichtung nach mindestens einem der Ansprüche 7 bis 10,
**dadurch gekennzeichnet,**
**dass** der Abstand der Schwenkachse (29) von der Grundschiene (1) veränderbar ausgebildet ist.

12. Vorrichtung nach mindestens einem der Ansprüche 1 bis 6,
**dadurch gekennzeichnet,**
**dass** der Aufnahmeplatte (5) ein Stellglied für die Bearbeitungsvorrichtung zugeordnet ist.
